Europäisches Patentamt

European Patent Office

Office européen des brevets

(11) Publication number: **0 225 661 B1**

(12) **EUROPEAN PATENT SPECIFICATION**

(45) Date of publication of patent specification: **19.06.91**

(51) Int. Cl.⁵: **E21B 43/25**, E21B 43/267, C07F 9/09

(21) Application number: **86202057.5**

(22) Date of filing: **20.11.86**

(54) Gelling organic liquids.

(30) Priority: **12.12.85 US 808133**

(43) Date of publication of application:
**16.06.87 Bulletin 87/25**

(45) Publication of the grant of the patent:
**19.06.91 Bulletin 91/25**

(84) Designated Contracting States:
**DE FR GB IT NL**

(56) References cited:
**US-A- 2 402 703**
**US-A- 3 757 864**

(73) Proprietor: **PUMPTECH N.V.**
**Atlantic House Noorderlaan 147 Bus 5C**
**B-2030 Antwerpen(BE)DE GB IT NL**

Proprietor: **COMPAGNIE DES SERVICES**
**DOWELL SCHLUMBERGER**
**50, Avenue Jean Jaurès B.P. 360**
**F-92541 Montrouge Cédex(FR)FR**

(72) Inventor: **Gross, J.Mark**
**6904 South First**
**Broken Arrow, OK 74011(US)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

Rank Xerox (UK) Business Services

## Description

### Field of the invention

This invention relates to a method for preparing organic liquid gels in particular gels of liquids which are primarily hydrocarbons. The gels are useful in fracturing subterranean formations.

### Description of Relevant Art

A technique for increasing the production of hydrocarbons from hydrocarbon bearing formations, consists of fracturing a subterranean formation into which the well is drilled, by means of pumping a fluid down the well into the formation, at sufficient flow rate and pressure so as to fracture the formation. A hard particulate proppant is often added to at least a portion of the fluid prior to pumping the fluid down the well. The proppant is thus carried into the resultant fracture, deposited, and holds the fracture open. In order to have the fluid efficiently carry the proppant, it is desirable to utilize a viscous fluid in the form of a gel. After the gel and proppant have been pumped into the fracture, the viscosity of the gel is reduced, thereby depositing the proppant within the fracture and allowing the fracturing fluids to return to the wellbore.

The viscosity of the fracturing fluid is important. The viscosity must be high enough to suspend and carry the proppant, but low enough to be readily pumpable. The gel used for fracturing should have a viscosity such that the hard particulate proppant does not prematurely settle out from the gel. If the gel is overly viscous, it will be difficult to pump down the well with conventional pumping equipment. A further requirement of the gel is that it maintains its viscosity at the higher temperatures often encountered in hydrocarbon bearing formations. Loss of such viscosity at higher temperatures may result in premature proppant deposition.

Historically, the art of gelling organic liquids - (typically hydrocarbons) for oil field fracturing purposes has involved introducing a phosphate ester and an aluminium source into the organic liquid. The in situ reaction between the phosphate ester and the aluminium source formed an aluminium phosphate ester which, in turn, gelled the hydrocarbon.

The first phosphate esters were made by reacting a mixture of alcohols (such as ethyl, octyl, and decyl alcohols) with $P_2 O_5$. The resulting product was a mixture of the corresponding mono-and-diphosphate esters. These and similar phosphate esters were termed "gelling agent" by the oil field industry. When the foregoing ethyl-octyl-decyl phosphate ester mixture was added to an organic liquid, along with an aluminium salt (typically, in the form of an aqueous sodium aluminate solution, acting as an "activator"), the corresponding aluminium phosphate ester was formed, thereby gelling the organic liquid. Gels produced by such a method tended to break and lose viscosity at temperatures much above 200°F (93°C).

Another method of making phosphate esters for this purpose involved reacting substantially equimolar amounts of triethyl phosphate and $P_2 O_5$ at about 158°F (70°C), to produce a polyphosphate reaction intermediate. Such intermediate was then reacted at about 194°F (90°C) with an equimolar amount of an alcohol (a commercial mixture of $C_8$ and $C_{10}$ alkanols), to produce a phosphate ester with its product skewed to be nearly all diester; statistically, one radical of the diester was an ethyl radical from the triethyl phosphate and the other radical was provided by the added alcohol. When this phosphate ester mixture was introduced to an organic liquid, and then reacted in situ with an aqueous sodium aluminate activator, the resulting gel gave improved viscosity/ temperature characteristics over the gel prepared using the phosphate ester gelling agent as described in the first method. This improved performance was apparently due to lower concentration of monoesters in the newer gelling agent. However, the gel prepared by this second method rapidly loses viscosity at temperatures much above 230°F (110°C), such viscosity loss becomes even more severe with time at such elevated temperatures. It should be noted that the gels prepared by both of the two foregoing methods again typically had water and pH affecting salts (in particular NaOH) in them, due to the use of the aqueous sodium aluminate solution as the activator.

Methods of preparing gels similar to the methods above, have been suggested but with reactants which provide phosphate diesters with aliphatic groups, one of them being a $C_6$ to $C_{26}$ aliphatic radical, and the other being a $C_6$ to $C_{26}$ aliphatic radical. In addition, the possibility of preparing gels by methods similar to the above, has also been suggested using other metal salts in place of the aluminium salt, for example, salts of gallium, lanthanum, erbium, thorium, or strontium.

### Summary of the invention

The present invention provides a method for preparing a gel particularly useful in fracturing subterranean formations and a method for fracturing such formations utilizing such a gel. The gel comprises a gellable organic liquid, a phosphate diester gelling agent and an activator. The organic liquid is typically a hydrocarbon such as crude oil, diesel, kerosene, or other refined hydrocarbon. The gel is prepared by adding or making in situ, a metal salt of a phosphate diester. Preferably, the statistical distribution of the organic radicals on each phosphate diester is : one being a $C_1$ to $C_{26}$ aliphatic radical, while the other is a $C_6$ to $C_{26}$ aliphatic radical. Most preferably one such radical is a $C_8$ to $C_{20}$ alkyl radical.

The preferred method of preparing the phosphate ester is : First, reacting a phosphate triester with $P_2O_5$ to produce a corresponding anhydrous polyphosphate reaction intermediate. Second, reacting the polyphosphate with an alcohol to produce the corresponding diester. statistically having one radical from the triester and another radical from the alcohol. The preferred method of preparing a gel is : First, the foregoing diester is added to a gellable organic liquid. Second, a metal salt activator with a non-pH affecting residue, such as a metal alkoxide and preferably aluminium isopropoxide. is also added to the organic liquid so that the metal salt reacts with the phosphate diester to produce the corresponding metal phosphate diester thereby gelling the organic liquid.

The viscosity response of the gels at different temperatures can be controlled by varying the chemical composition of the phosphate diester as well as varying the phosphate ester to activator ratio. Changes in the chemical composition of the phosphate diester can be accomplished by altering the mole ratios of the trialkyl phosphate ester and the $P_2O_5$ used in the first step of the reaction sequence, as well as the mole ratios of the alcohol and the polyphosphate reaction intermediate used in the second step of the reaction sequence. Fluids with excellent high temperature stability are produced for example, by using from about 20% to about 40% (and preferably a 30% to 40%) mole excess of triethyl phosphate in the preparation of the polyphosphate. In addition, 20% mole excess of the alcohol is preferably utilized in producing the phosphate diester. By "mole excess" is meant the excess number of moles above the stoichiometrically desired amount. Typically the polyphosphate intermediate is allowed to react with the alcohol for a period of at least one hour, while the temperature is maintained at least substantially at $130°C$.

Gels produced by the above methods can be used in fracturing a subterranean formation which is penetrated by a wellbore. Using conventional pumping procedures, a hard particulate proppant is usually entrained in the gel by known blending techniques, and the slurry (gel and proppant) is then pumped down the well into the subterranean formation, at sufficient flow rates and pressure so as to create and/or extend a fracture into the formation. Other conventional additives (e.g. breakers) used with oil-base fracturing fluids can also be used in the fracturing fluids of the present invention.

## Drawings

Embodiments of the invention will now be described with reference to the drawings in which :

Figure 1 illustrates viscosity vs. time profiles of a gel prepared by the method of the present invention at various temperatures.

Figure 2 is a graph similar to Figure 1 , but for a gel prepared by another method.

Figure 3 illustrates a viscosity vs. temperature profile of a gel prepared by still another method.

Figure 4 illustrates Marsh Funnel times for a gel prepared by the method of the present invention, versus increased concentration of water present in the gel.

Figure 5 illustrates the viscosity over time of a gel prepared by the method of the present invention with different amounts of aluminium isopropoxide salt used as a mole percentage of the theoretical stoichiometric amount.

Figure 6 illustrates the viscosity vs. temperature profile of a gel which is prepared by another method.

Figures 7-15 illustrate viscosity vs. time profiles for gels prepared by the method of the present invention in which the phosphate diesters used to prepare the gels were manufactured under various reaction conditions: and

Figure 16 illustrates the Marsh Funnel time vs. percent aluminium isopropoxide that is needed for reaching the "endpoint" of gel used for fracturing.

## Detailed Description of Embodiments of the invention.

The viscosity of a suitable hydrocarbon can be raised by the addition of, followed by the in situ reaction of a phosphate diester with selected metallic salts. The rheology, i.e. the viscosity profile as a function of time and temperature under shear conditions, of such a gelled hydrocarbon, is affected by the presence or absence of any significant amounts of water and/or pH-affecting substances. The rheology of the gel is also affected by the choice of the phosphate diester used to prepare the gel.

The present method of preparing a desirable phosphate diester is accomplished by reacting a phosphate triester with $P_2O_5$ to produce a polyphosphate reaction intermediate. The polyphosphate is then reacted with an alcohol to produce a phosphate diester gelling agent.

The use of a non-aqueous aluminium salt (e.g. aluminium alkoxides) in the preparation of the gel helps eliminate introduction of water and/or pH-affecting substances. For example, aluminium isopropoxide in a solution of an organic solvent can be used as the activator for reacting with the phosphate diester. The in situ reaction between the aluminium and the phosphate diester causes the organic liquid to gel. Using this method, hydrocarbon gels were prepared as specified in the following examples. Viscosity measurements were made on each of the gels to aid in determining their utility as a fracturing fluid using a Model 50C Fann Viscometer. The rheology of the fluids was determined under a variety of shear rate conditions and temperature conditions. The viscosity of the hydrocarbon gels was also measured using a Marsh Funnel viscometer. The advantage of using a Marsh Funnel is that its physical size and durability allow for it to be used under these types of viscometers, it is readily apparent that the shear rate conditions and the temperature conditions encountered when using a Marsh Funnel probably do not simulate the downhole fracturing environment. However, the data obtained from the Marsh Funnel tests on the present fluids proved to be remarkably good in identifying suitable fracture fluids.

Example 1 : Triethyl phosphate and a solvent of aromatic hydrocarbons are mixed together in a reactor and preheated to 110°F (43°C). $P_2O_5$ is added to form a reaction intermediate, keeping the temperature below 195°F (90°C). On addition of all the $P_2O_5$, the temperature is maintained at 210°F (100°C) for 1 hour. Following this, ALFOL 810 (a commercial mixture of $C_8$ and $C_{10}$ alkanols) is added to the reaction intermediate and the mixture cooked at 265°F (130°C) for 2 hours.

Chemical Ratios used :

$P_2O_5$ -1 mole.

Triethyl phosphate -1.3 mole : 30% mole excess

ALFOL 810 -3.9 mole ; 30% mole excess

Aromatic hydrocarbon solvent -20% by weight of final product.

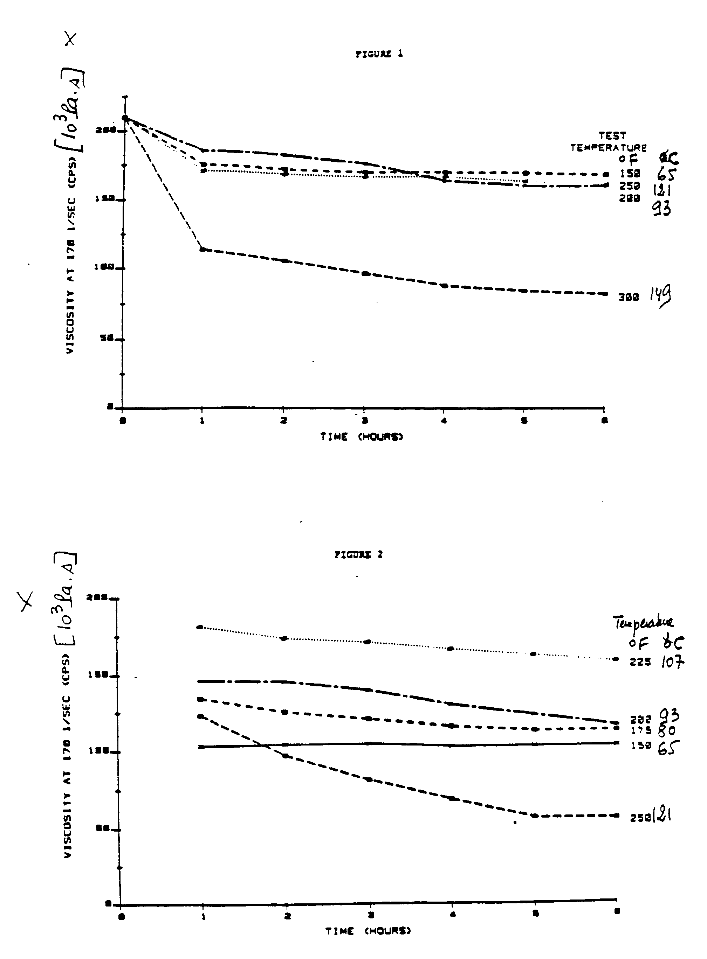

The gelling agent resulting from the above was used to gel diesel oil by addition thereto along with aluminium isopropoxide. The viscosity vs. time profiles of the resulting gel at various temperatures are shown in Figure 1. As will be seen from Figure 1, the foregoing gel exhibits good viscosity characteristics even up to 300°F (149°C).

Example 2 : In a comparative experiment, triethyl phosphate and a solvent of aromatic hydrocarbons are mixed together in a reactor and preheated to 100°F (43°C). $P_2O_5$ is added, reacting with the triethyl phosphate to form a polyphosphate reaction intermediate. During the $P_2O_5$ addition the temperature is kept below 158°F (70°C) and then the temperature is subsequently maintained at 158°F (70°C) for one hour. Following this, ALFOL 810 is added to the reaction intermediate and the mixture is cooked at 195°F (90°C) for two hours.

Chemical Ratios used :

$P_2O_5$ -1 mole.

Triethyl phosphate -1.3 mole : 30% mole excess

ALFOL 810 -3.1 mole ; 3% mole excess

Aromatic hydrocarbon solvent -20% by weight of final product.

A hydrocarbon gel was prepared by adding to diesel oil, a commercially available aqueous solution of sodium aluminate (which has sodium hydroxide present as a stabilizing agent) and the foregoing phosphate diester. The viscosity vs. time profile at several temperatures is shown in Figure 2. The gel was also tested at 275°F (135°C) and it exhibited even poorer viscosity than 250°F (121°C). A comparison of Figure 2 with Figure 1 illustrates the superior rheology of a gel prepared by the method of Example 1 (which is a method of the present invention), over the method of this Example (which is not a method of the present invention).

Example 3 : In another comparative experiment, ethanol and ALFOL 810 are mixed together in a reactor and preheated to 150°F (65°C), then $P_2O_5$ is added to the alcohols not letting the reaction temperature exceed 175°F (79°C). Upon addition of all the $P_2O_5$, the temperature is maintained at 212°F (100°C) for 90 minutes. This product contains substantially equimolar quantities of ethyloctyl-decyl phosphate mono- and diesters.

Chemical Ratios Used :

$P_2O_5$ -1 mole

Ethanol -1.8 mole

ALFOL 810 -1.8 mole

Aromatic hydrocarbon solvent -20% by weight of final product.

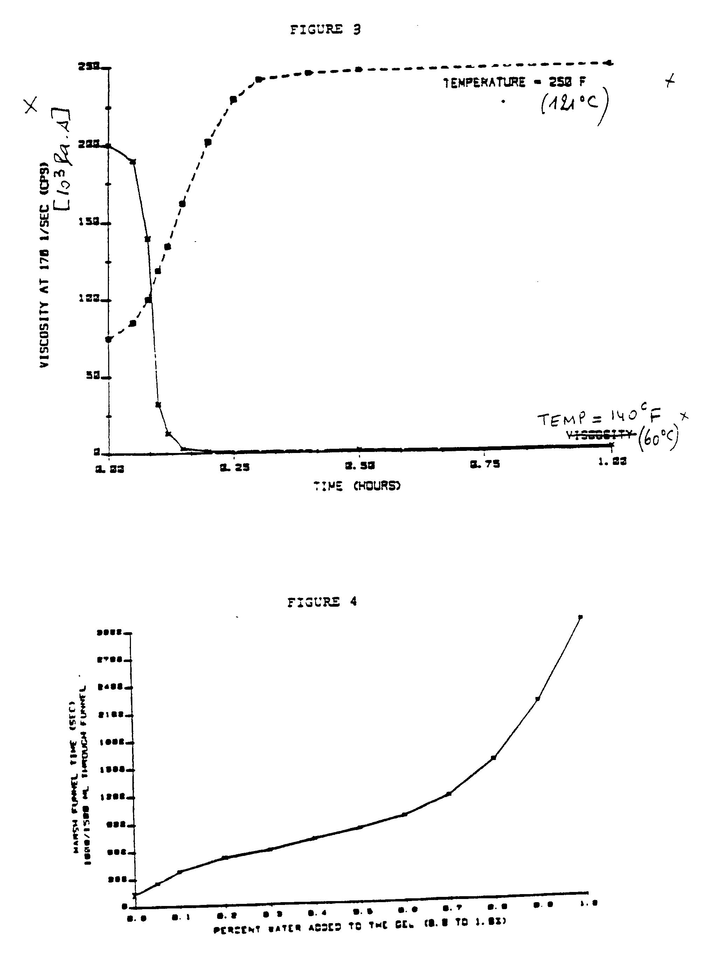

The foregoing phosphate ester gelling agent is added to diesel in an amount equal to 8 liters per 1000 liters diesel. To this solution is added a solution of aluminum isopropoxide until the consistency of the gel exhibits a smooth honey-like character. The uniformity of this gel is not easy to achieve and even when the desired gel is reached, the viscosity degrades rapidly when it is subjected to elevated temperatures. In Figure 3 the viscosity vs. time/temperature profile of such a gel is plotted at 250°F (121°C). As can be seen from Figure 3, the resulting gel was useless as a fracturing fluid even at a temperature of about 140°F (60°C) because of its low viscosity. Thus, as here illustrated, it is not sufficient to react a non-aqueous source of aluminum - (the aluminum isopropoxide in this case) with a phosphate ester which results from reacting a mixture of alcohols directly with $P_2O_5$. This is apparently a result of the substantial amounts of monoesters which are produced when a phosphate ester is prepared by the method of this example.

Example 4 : Two hydrocarbon gels were prepared for comparison purposes. Gel #1 was made by introducing 8.0 ml of the phosphate ester gelling agent prepared by the procedure described in Example 2 into 1000 ml of diesel under agitation. To this was added 0.88 ml of a sodium aluminate activator solution and the mixture was allowed to continue to agitate for a period of two minutes. Gel #2 was made by agitating 1000 ml of diesel to which was added 8.0 ml of the phosphate ester gelling agent prepared by the procedure as described in Example 1, and 2.35 ml of an aluminum isopropoxide solution, all of which was allowed to mix for a period of two minutes. Viscosity measurements using the Marsh Funnel and the Model 50C Fann Viscometer were made, and are illustrated in Tables I and II.

## TABLE I

### MARSH FUNNEL TIMES[1] (s)

| Time After gel Formed (h) | Gel Prepared Using Aqueous Sodium Aluminate | Gel Prepared Using Aluminum Isopropoxide |
|---|---|---|
| 0 | 7 | - |
| 1 | 60 | 144 |
| 2 | 85 | - |
| 3 | 120 | - |
| 4 | 150 | - |
| 5 | 180 | - |
| 6 | 210 | - |
| 24 | 650* | 125 |
| 48 | 780 | - |

[1]Time to drain the first 1000 ml from a Marsh Funnel that has been filled with fluid to the screen.

* It was found in different trials of gels made by the same method that this value was sometimes greater than 1000 secs which emphasizes the erratic results obtained by prior art gels.

## TABLE II

### VISCOSITY AT 250°F (121°C) 170 SEC -1 (10$^3$ Pa s)(cps)2

| Time at Temperature (h) | Gel Prepared using Aqueous Sodium Aluminate | Gel Prepared Using Aluminum Isopropoxide |
|---|---|---|
| 1 | 123 | 171 |
| 2 | 97 | 169 |
| 3 | 81 | 167 |
| 4 | 68 | 164 |
| 5 | 56 | 163 |
| 6 | 55 | 162 |

2Gel aged 16 hours before being tested on the Fann 50C.

Note that the Marsh Funnel times of Gel #1, prepared using the aqueous sodium aluminate solution, continued to change over a period of time making it difficult to predict when the gel had achieved adequate viscosity for use as a fracturing fluid. This same gel, having been aged for sixteen hours, still gave inadequate viscosity when it was then exposed to 250°F (121°C) for more than 4-5 hours in a Fann 50C Viscometer. On the other hand. Gel #2, prepared using the aluminum isopropoxide, exhibited stable Marsh Funnel times even after 24 hours. Also, Gel #2 demonstrated adequate and stable viscosities when it was tested at 250°F (121°C) on the Fann 50C. Thus it can be seen from Table I that gels prepared using the method of the present invention (Example 4, Gel #2, in which aluminum isopropoxide was used), can be prepared in the lab and more importantly, at a well site, with the desired viscosity being readily ascertained - (monitored) by a simple method such as using a Marsh Funnel which correlates to the results obtained from the more sophisticated Fann 50C Viscometer. On the other hand, gels which are prepared by a method not in accordance with the present invention (Example 4, Gel #1, in which aqueous sodium aluminate was used) may appear to have the desired viscosity as measured by the Marsh Funnel test, but in fact when exposed to elevated temperatures, will have viscosities which are far too low for a suitable fracturing fluid.

Example 5 : A hydrocarbon gel was prepared in accordance with the method of Example 1. Various percentages of water were added thereto with Marsh Funnel viscosity, measurements being made on each sample. The resulting Marsh Funnel times being plotted as a function of the percent weight of water added are illustrated in Figure 4. The Marsh Funnel times did not bear any discernible relationship to the viscosities of the same fluids when measured on the Fann 50C Viscometer at 170 sec $^{-1}$ Thus, Figure 4 illustrates again, the importance of maintaining the reagents for making this gel anydrous or substantially free of water. Typically less than about 0.05 percent are present in fluids prepared according to the present invention.

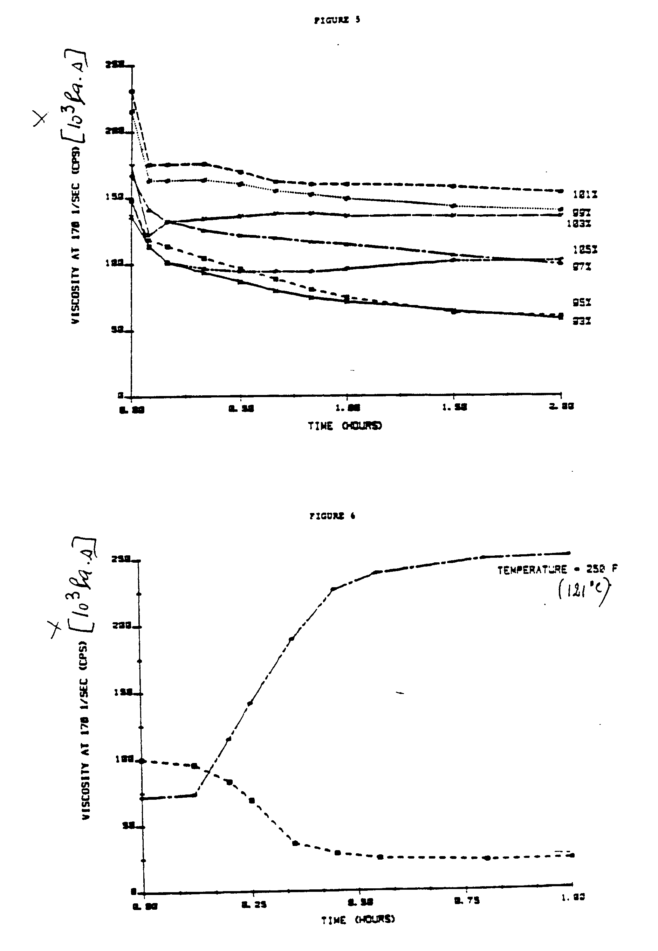

Example 6 : A hydrocarbon gel was prepared in accordance with the method of Example 1 except that aluminum octanoate was substituted for the aluminum isopropoxide in the gelling process. The viscosity and temperature vs. time profile for the resulting gel is illustrated in Figure 6. As will be seen from that Figure, the gel had very low viscosity even at relatively low temperature or less than 212°F(100°C). This again demonstrates the effect on a gel that is caused by introducing the aluminum salt to the gel in a chemical form that contains a pH- affecting counterion.

In preparing a gel by the method of Example 1, it is preferable to use close to 100% of the theoretical stoichiometric amount of aluminum isopropoxide required, for best gel viscosity performance. This fact is illustrated in Figure 5 wherein gels were prepared by the method of Example 1, but using varying various percentages of aluminum isopropoxide activator.

As mentioned earlier in this discussion, the rheology of a hydrocarbon gel can be altered by the choice of the phosphate diester used to prepare the gel. Changes in the phosphate diester can be effected by varying the ratios of the reactants used in the manufacturing process and/or by varying the rection temperatures used in the manufacturing process. Several different phosphate diester gelling agents were prepared by the method described in Example 1 : wherein (Step 1 of the reaction sequence) various polyphosphate reaction intermediates were formed by altering the mole ratios of $P_2O_5$ to triethyl phosphate or by altering the reaction temperature conditions, and/or wherein - (Step 2 of the reaction sequence) various molar amounts of ALFOL 810 were added to the polyphosphate reaction intermediate and/or various reaction temperature conditions were employed. Hydrocarbon gels prepared (also outlined in Example 1) using these various phosphate diester gelling agents were tested on a Fann 50C viscometer to determine their stability at 250°F (121°C).

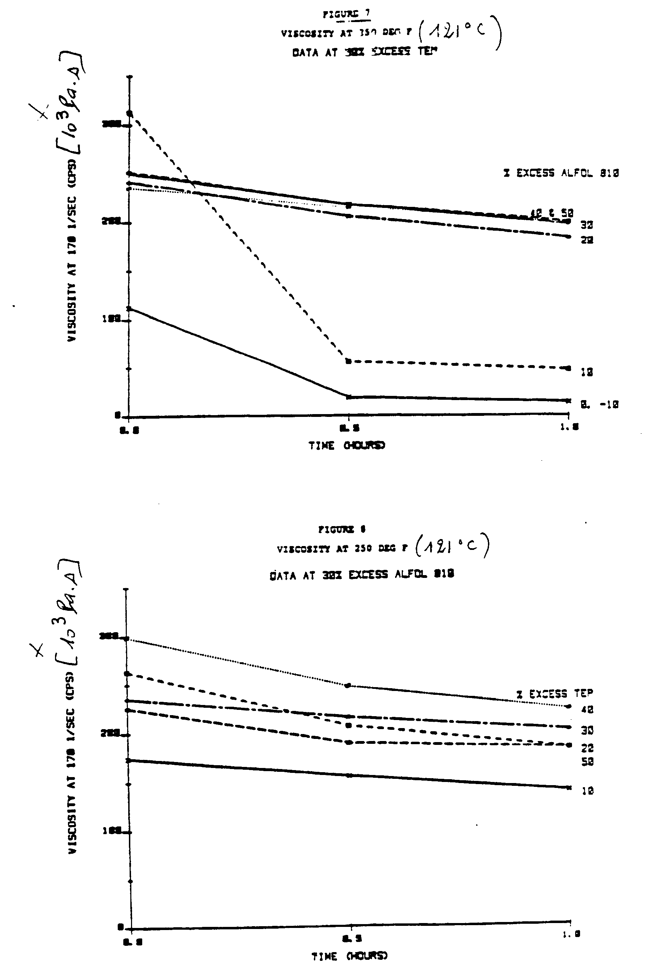

Figure 7 illustrates the rheology of hydrocarbon gels prepared using gelling agents whose chemistry was varied by changing the molar concentration of ALFOL 810 while maintaining a constant molar concentration of triethyl phosphate. The data from Figure 7 indicate that gels with the best viscosity vs. time characteristics were obtained when they were prepared with gelling agents that had been manufactured with at least 20% mole excess, and preferably at least 30% mole excess ALFOL 810 in the reaction sequence.

Similarly, Figure 8 illustrates the rheology of gels prepared using gelling agents whose chemistry was varied by changing the molar concentration of triethyl phosphate while maintaining a constant molar concentration of ALFOL 810. Figure 8 suggests that gels with the best viscosity profiles were obtained when they were prepared with gelling agents that had been manufactured with 20 to 40% mole excess triethyl phosphate in the reaction sequence.

Combining the information from Figures 7 and 8 indicates that a gelling agent prepared with 20 to 40% mole excess triethyl phosphate and 30% mole excess ALFOL 810 can be used to make a hydrocarbon gel that exhibits good viscosity characteristics. In each case, for Figure 7 and Figure 8, the reaction temperature for Step 1 of the reaction sequence was held at 70°C and Step 2 of the reaction sequence was held at 90°C.

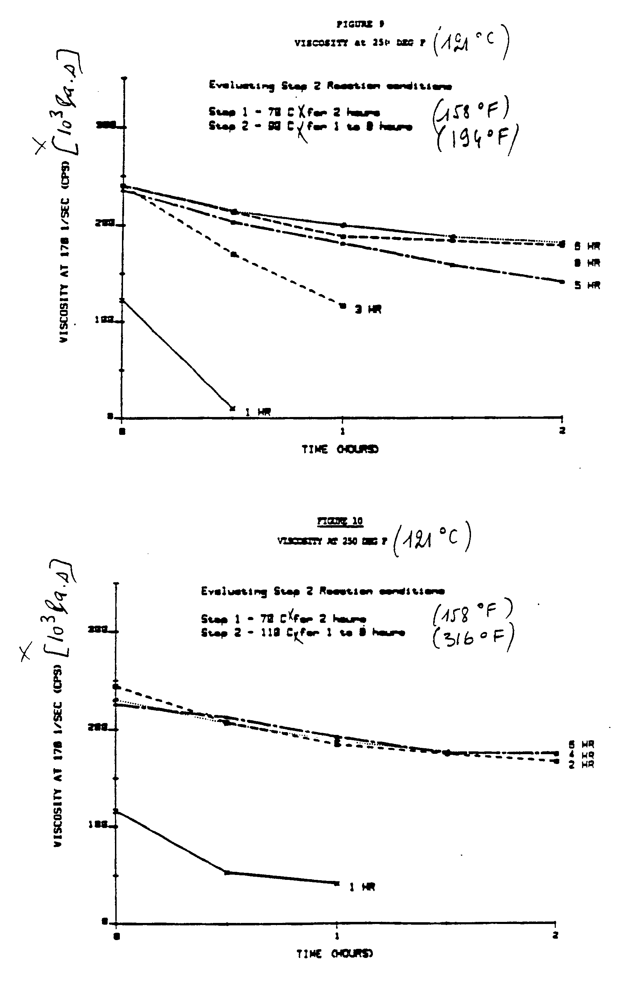

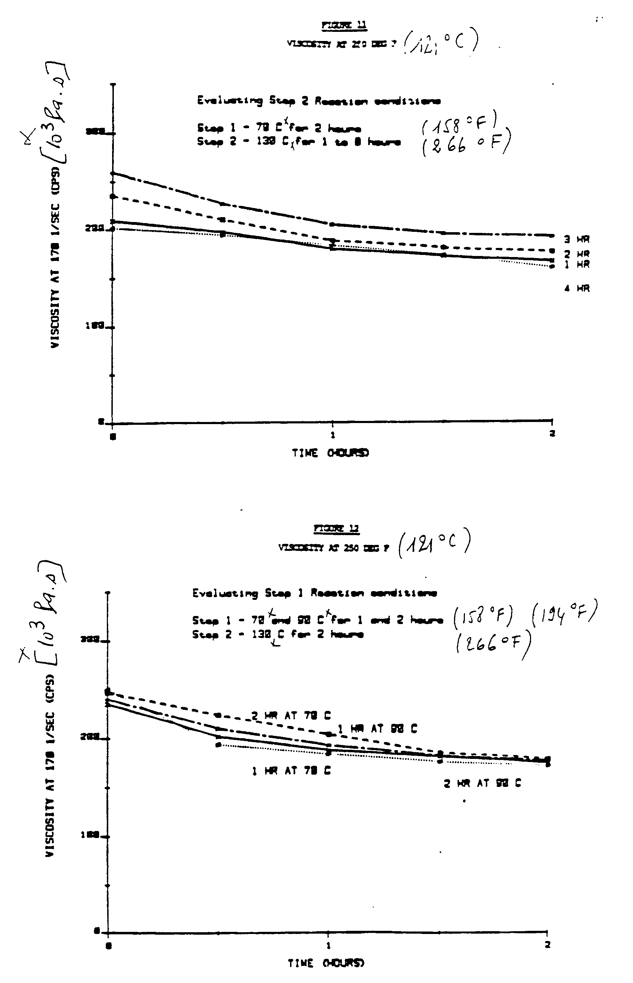

Figures 9, 10 and 11 illustrate the viscosity vs. time profiles of hydrocarbon gels prepared (according to Example 1) using gelling agents whose chemistry was varied by changing the duration of and the temperature conditions of Step 2 of the reaction sequence (90°C (194°F), 110°C (230°F) and 130°C (266°F) for Figures 9, 10 and 11, respectively) while keeping the temperature of Step 1 at 70°C. Also, the ratios of the reactants were maintained as outlined in Example 1. Each curve on the graphs denotes a change in the duration of the cooking time for Step 2 in the reaction sequence of the phosphate diester gelling agent which was used in the preparation of that respective hydrocarbon gel. The composite evaluation of Figures 9,10 and 11 suggests that the desirable phosphate diester gelling agent can be expediently formed by raising the temperature for Step 2 of the reaction sequence to 266°F (130°C).

Figure 12 illustrates the viscosity vs. time profiles of hydrocarbon gels prepared (according to Example 1) using gelling agents whose chemistry was varied by changing the duration of and the temperature conditions (90°C and 100°C) (194°F and 212°F) of Step 1 of the reaction sequence while keeping the temperature of Step 2 at 130°C (266°F). Also the ratios of the reactants were maintained as outlined in Example 1. Each curve on the graph denotes a change in the duration of the cooking time and a change in the cooking temperature for Step 1 in the reaction sequence of the phosphate diester gelling agent that was used in the preparation of that respective gel. The results shown in Figure 12 indicate that in the preparation of a phosphate diester gelling agent, the variation in temperature between 70°C and 90°C (158°F and 194°F) and/or the variation in the duration of cooking time from 1 to 2 hours for Step 1 of the reaction sequence impart little difference into the viscosity of hydrocarbon gel made from the gelling agent.

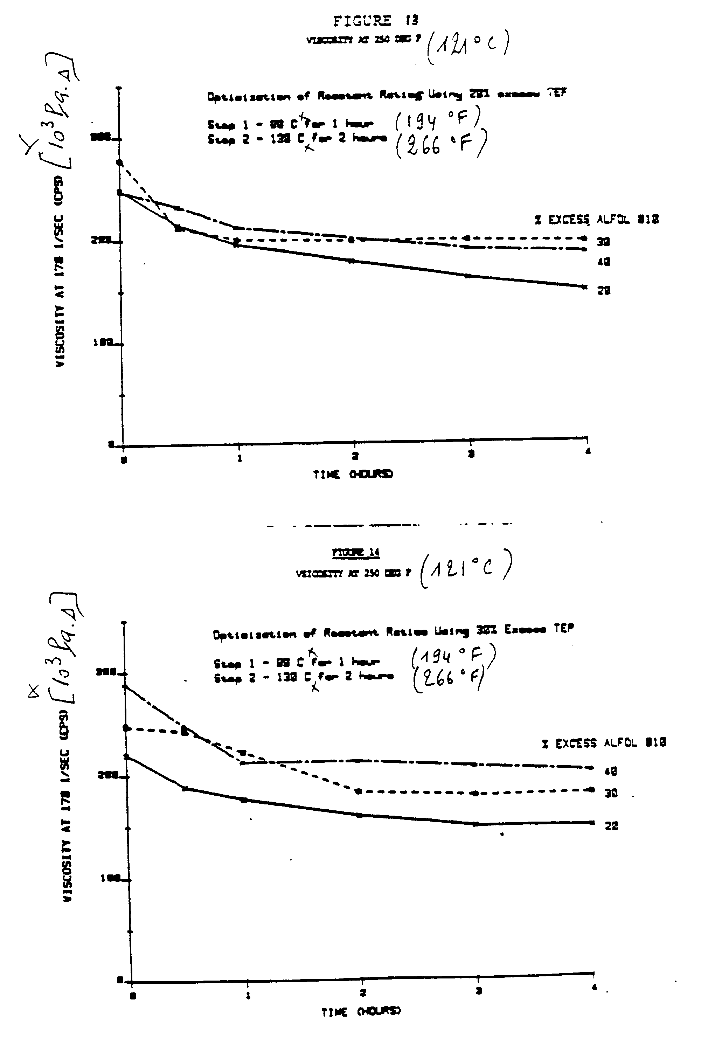

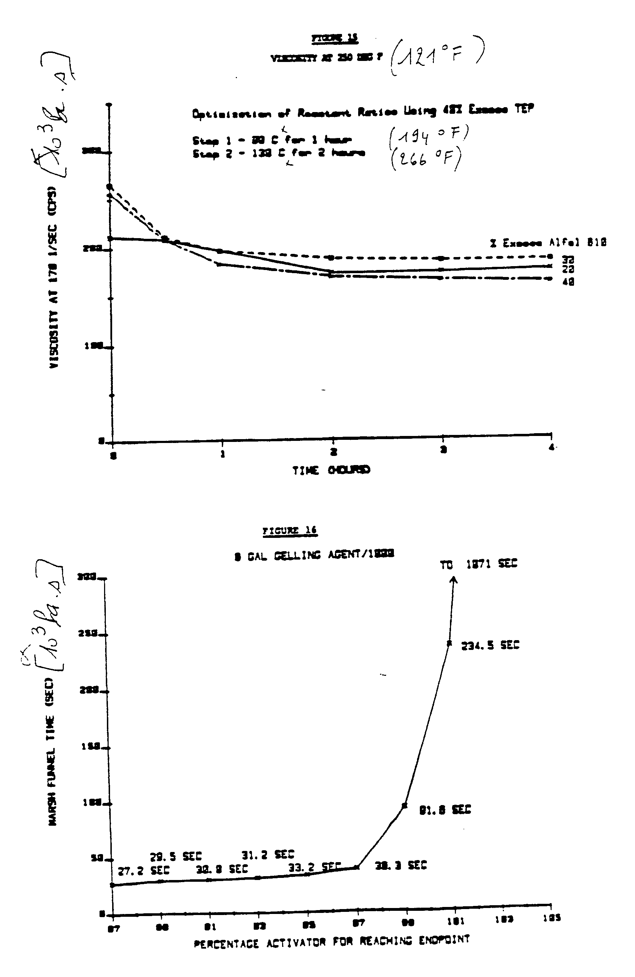

Figures 13, 14 and 15 illustrate the viscosity vs. time profiles of hydrocarbon gels prepared (according to Example 1) using gelling agents whose chemistry was varied by changing the ratios of reactants as is indicated in those Figures and at the same time maintaining the optimum temperature conditions as detailed in Figures 8-11 -(that is, Step 1 of the reaction sequence at 90°C (194°F) for one hour, and Step 2 of the reaction sequence at 130°C (266°F) (for two hours). Each curve on the graphs represents a change in the reactant ratios of the phosphate diester gelling agent which was used in the preparation of that respective gel. The composite evaluation of Figures 13, 14 and 15 suggests that the desirable phosphate diester gelling agent can be formed by incorporating 30 to 40 percent mole excess AIFOL 810 (30% and 40% being only slightly better than 20%) and 20 to 40% mole excess triethyl phosphate when carried out at the above prescribed temperature conditions.

Therefore, it will be seen from the results in Figures 9-15 that acceptable hydrocarbon gels are made when they are prepared using a phosphate diester gelling agent manufactured according to the following preferred reaction conditions : Step 1 : 90°C (194°F) for about one hour with about 20% to about 40% mole-equivalent excess TEP ;
Step 2 : 130°C (266°F) for about two hours with about 30% to about 40% mole-equivalent excess ALFOL 810.
Preferably, about 30% mole excess ALFOL 810 and about 30% mole excess triethyl phosphate are used for making the phosphate diester, based on a cost performance analysis.

Figure 16 illustrates the Marsh Funnel times of gels as a function of the amount of activator that was used in their preparation. The data in Figure 16 have been determined for 8 liters gelling agent per 1000 liters of diesel. The amount of aluminum alkoxide, and in this case aluminum isopropoxide. that is needed for optimizing the gel performance is determined by the usable viscosity of the gel. The "endpoint" of the reaction between the gelling agent and the aluminum activator is said to reach 100% +·-1% when the Marsh Funnel viscosity of the gel falls between 100 and 250 seconds (the time it takes to drain the first 1000 ml from a Marsh Funnel that has been filled with fluid to the screen). In this range, the elevated temperature performance of the gel is good for fracturing purposes, and the viscosity is such that the fluid can still be handled with conventional oilfield equipment. The Marsh Funnel time at the "endpoint" will change as the concentration of gelling agent and activator change and/or can be different for hydrocarbon sources other than diesel, however, these differences can be easily quantified in the lab when necessary.

As will be apparent to those skilled in the art, various modifications can be made in the performance of the method of the present invention. Accordingly, the scope of the present invention is to be interpreted with reference to the following Claims.

## Claims

1. A method of preparing a gel comprising mixing by contacting a gellable organic liquid, with a metal phosphate ester, and which metal phosphate ester is free of water and pH affecting substances.

2. A method as defined in Claim 1 wherein the organic liquid is a hydrocarbon, one of the radicals of the phosphate diester is a $C_1$ to $C_{26}$ aliphatic radical, while another radical thereof is a $C_6$ to $C_{26}$ aliphatic radical and wherein the metal of the metal phosphate diester is aluminum.

3. A method as described in Claim 2 wherein the aliphatic radicals of the phosphate diester are alkyl radicals.

4. A method as defined in Claim 1 of producing a gel of an organic liquid comprising mixing by contacting a gellable organic liquid with :
   (a) a phosphate diester gelling agent prepared by (i) reacting a phosphate triester with $P_2O_5$ so as to produce a corresponding anhydrous polyphosphate ; (ii) reacting the polyphosphate of Step (i) with an alcohol so as to produce the corresponding phosphate diester having one radical from the triester and another from the alcohol ; and
   b) a metal salt activator with a non-pH affecting residue ;
   all of the reagents being free of water and pH affecting substances.

5. A method as described in Claim 4 wherein the metal salt is an aluminum alkoxide salt.

6. A method as described in Claim 4 wherein the phosphate triester in triethyl phosphate, and wherein from 20 percent to 40 percent mole excess of the trialkyl phosphate ester is utilized, relative to the amount of $P_2O_5$, in producing the anhydrous polyphosphate.

7. A method as decribed in Claim 6 wherein at least 20 percent mole excess of the alcohol is utilized in producing the phosphate diester.

8. A method as described in Claim 6 wherein the metal salt is an aluminum alkoxide salt, the phosphate triester is triethyl phosphate, and from 30 percent to 40 percent mole excess of the trialkyl phosphate ester is utilized, relative to the amount of $P_2O_5$, in producing the anhydrous polyphosphate, and wherein at least 20 percent mole excess of the alcohol is utilized in producing the phosphate diester.

9. A method as described in Claim 8 additionally comprising maintaining the reaction temperature at least at 130°C while allowing the polyphosphate to react with the alcohol for a period of at least about one hour.

10. A method as described in Claim 9 wherein the alcohol salt is aluminum isopropoxide.

11. A method of fracturing a subterranean rock formation which is penetrated by a wellbore comprising :
(a) preparing a gel by mixing a gellable organic liquid with a metal phosphate ester, which is a metal phosphate diester, all of the reagents being free of water and pH-affecting substances ;
(b) entraining a hard particulate proppant within the gel ; and
(c) pumping the gel down the wellbore into contact with the subterranean formation at sufficient pressure so as to create and/or extend a fracture into the formation.

12. A method as described in Claim 11 wherein the organic liquid is primarily a hydrocarbon one of the radicals of the phosphate diester, is a $C_1$ to $C_{26}$ aliphatic radical, while another radical thereof is a $C_6$ to $C_{26}$ aliphatic radical.

13. A method as described in Claim 12 wherein the aliphatic radicals of each phosphate group of the phosphate diester are alkyl radicals.

14. A method as defined in Claim 11 of fracturing a subterranean formation comprising :
(a) preparing a gel comprising mixing by contacting a gellable organic liquid with :
(i) a phosphate diester gelling agent prepared by :
(1) reacting a phosphate triester with $P_2O_5$ so as to produce a corresponding anhydrous polyphosphate ;
(2) reacting the polyphosphate of step (1) with an alcohol so as to produce the corresponding phosphate diester having one radical from the triester and another from the alcohol ; and
(ii) a metal salt activator with a non-pH affecting residue ;
all of the reagents being free of water and pH affecting substances ;
(b) entraining a hard particulate proppant within the gel ; and
(c) pumping the gel down the wellbore into contact with the subterranean formation at sufficient pressure so as to create and/or extend a fracture into the formation.

**Revendications**

1. Procédé pour préparer un gel selon lequel on mélange, par mise en contact, un liquide organique gélifiable avec un ester phosphate de métal, lequel est dépourvu d'eau et de substances affectant le pH.

2. Procédé selon la revendication 1 dans lequel le liquide organique est un hydrocarbure, l'un des radicaux du diester phosphorique est un radical aliphatique contenant de 1 à 26 atomes de carbone tandis qu'un autre est un radical aliphatique contenant de 6 à 26 atomes de carbone, et dans lequel le métal du diester phosphate de métal est l'aluminium.

3. Procédé selon la revendication 2 dans lequel les radicaux aliphatiques du diester phosphorique sont des radicaux alkyles.

4. Procédé selon la revendication 1 pour préparer un gel d'un liquide organique, procédé selon lequel on mélange, par mise en contact, un liquide organique gélifiable avec :
(a) un diester phosphorique servant de gélifiant que l'on a préparé :

(i) en faisant réagir un triester phosphorique avec $P_2O_5$ de manière à obtenir un polyphosphate anhydre correspondant, et

(ii) en faisant réagir le polyphosphate de l'étape (i) avec un alcool de manière à obtenir le diester phosphorique correspondant qui renferme un radical provenant du triester et un autre provenant de l'alcool,

et

(b) un sel métallique, servant d'activant, renfermant un radical n'affectant pas le pH,

tous les réactifs étant dépourvus d'eau et de substances affectant le pH.

5. Procédé selon la revendication 4 dans lequel le sel métallique est un alcoolate d'aluminium.

6. Procédé selon la revendication 4 dans lequel le triester phosphorique est le phosphate de triéthyle, et dans lequel on utilise un excès molaire du phosphate de trialkyle compris entre 20 % et 40 %, par rapport à la quantité de $P_2O_5$, dans la préparation du polyphosphate anhydre.

7. Procédé selon la revendication 6 dans lequel on utilise un excès molaire de l'alcool d'au moins 20 % dans la préparation du diester phosphorique.

8. Procédé selon la revendication 6 selon lequel le sel métallique est un alcoolate d'aluminium, le triester phosphorique est le phosphate de triéthyle et on utilise, dans la préparation du polyphosphate anhydre, un excès molaire du phosphate de trialkyle compris entre 30 et 40 % par rapport à la quantité de $P_2O_5$, et selon lequel on utilise, dans la préparation du diester phosphorique, un excès molaire de l'alcool d'au moins 20 %.

9. Procédé selon la revendication 8 selon lequel on maintient la température réactionnelle à au moins à 130° C tout en laissant le polyphosphate de réagir avec l'alcool pendant au moins une heure

10. Procédé selon la revendication 9 dans lequel le sel d'aluminium est l'isopropylate d'aluminium.

11. Procédé de fracturation d'une formation souterraine dans laquelle un puits est foré, procédé selon lequel :

(a) on prépare un gel par mélangeage d'un liquide organique gélifiable avec un ester phosphate de métal, lequel est un diester phosphate de métal dépourvu d'eau et de substances affectant le pH,

(b) on entraîne dans le gel un agent de soutènement en particules dures, et

(c) on injecte le gel par pompage dans le puits de forage de manière à le mettre en contact avec la formation souterraine sous une pression suffisante pour produire et/ou pour étendre une fracture dans la formation.

12. Procédé selon la revendication 11 dans lequel le liquide organique est essentiellement un hydrocarbure, l'un des radicaux du diester phosphorique est un radical aliphatique contenant de 1 à 26 atomes de carbone tandis qu'un autre est un radical aliphatique contenant de 6 à 26 atomes de carbone.

13. Procédé selon la revendication 12 dans lequel les radicaux aliphatiques de chaque groupe phosphate du diester phosphorique sont des radicaux alkyles.

14. Procédé selon la revendication 11 pour fracturer une formation souterraine selon lequel :

(a) on prépare un gel en mélangeant par mise en contact un liquide organique gélifiable avec :

(i) un agent gélifiant qui est un diester phosphorique préparé

(1) en faisant réagir un triester phosphorique avec $P_2O_5$ de manière à obtenir un polyphosphate anhydre, et

(2) en faisant réagir le polyphosphate de l'étape (1) avec un alcool de manière à obtenir le diester phosphorique correspondant qui renferme un radical provenant du triester et un autre provenant de l'alcool, et

(ii) un activant (sel métallique) contenant un radical n'affectant par le pH ;

(b) On entraîne dans le gel un agent de soutènement en particules dures ; et

(c) On injecte le gel par pompage dans le puits de forage de manière à le mettre en contact avec la formation souterraine sous une pression suffisante pour produire et/ou pour étendre une fracture dans la formation.

## Ansprüche

1. Verfahren zur Herstellung eines Gels, umfassend Mischen durch Zusammenbringen einer gelierfähigen organischen Flüssigkeit mit einem Metall-Phosphatester, und wobei der Metall-Phosphatester frei von Wasser und PH-beeinflussenden Substanzen ist.

2. Verfahren nach Anspruch 1, wobei die organische Flüssigkeit ein Kohlenwasserstoff ist, einer der Reste des Phosphat-Diesters ein aliphatischer $C_1$ bis $C_{26}$- Rest ist, während sein anderer Rest ein aliphatischer $C_6$ bis $C_{26}$- Rest ist, und wobei das Metall des Metall-Phosphat-Diesters Aluminium ist.

3. Verfahren nach Anspruch 2, wobei die aliphatischen Reste des Phosphat-Diesters Alkylreste sind.

4. Verfahren nach Anspruch 1 zur Herstellung eines Gels aus einer organischen Flüssigkeit, umfassend Mischen durch Zusammenbringen einer gelierfähigen Flüssigkeit mit:
   (a) einem Phosphat-Diester-Geliermittel, hergestellt durch (i) Reaktion eines Phosphat-Triesters mit $P_2O_5$, um ein entsprechendes wasserfreies Polyphosphat zu erzeugen; (ii) Reaktion des Polyphosphats von Schritt (1) mit einem Alkohol, um den entsprechenden Phosphat-Diester zu erzeugen, welcher einen Rest von dem Triester und einen anderen von dem Alkohol aufweist; und
   (b) einem Metallsalzaktivator mit einem den pH nicht beeinflussenden Rest;
   wobei alle dieser Reagentien frei von Wasser und PH-beeinflussenden Substanzen sind.

5. Verfahren nach Anspruch 4, bei dem das Metallsalz ein Aluminium-Alkoxidsalz ist.

6. Verfahren nach Anspruch 4, wobei der Phosphat-Triester Triethylphosphat ist, und wobei zur Herstellung des wasserfreien Polyphosphats relativ zur Menge des $P_2O_5$ von 20 Prozent bis 40 Prozent molarer Überschuß des Trialkyl-Phosphatesters verwendet wird.

7. Verfahren nach Anspruch 6, wobei wenigstens 20 Prozent molarer Überschuß des Alkohols zur Herstellung des Phosphat-Diesters verwendet wird.

8. Verfahren nach Anspruch 6, wobei das Metallsalz ein Aluminiumalkoxisalz ist, der Phosphat-Triester Triethylphosphat ist, und relativ zur Menge des $P_2O_5$ von 30 Prozent bis 40 Prozent molarer Überschuß des Trialkyl-Phosphatesters verwendet wird, um das wasserfreie Polyphosphat herzustellen, und wobei wenigstens etwa 20 Prozent molarer Überschuß des Alkohols zur Herstellung des Phosphat-Diesters verwendet wird.

9. Verfahren nach Anspruch 8, zusätzlich umfassend das Erhalten der Reaktionstemperatur bei wenigstens 130 °C, während man Polyphosophat mit dem Alkohol für eine Dauer von wenigstens etwa einer Stunde reagieren läßt.

10. Verfahren nach Anspruch 9, wobei das Alkoholsalz Aluminium-Isopropoxid ist.

11. Verfahren zum Aufbrechen einer unterirdischen Gesteinsformation, welche durch eine Brunnenbohrung durchbohrt ist, umfassend:
   (a) Herstellen eines Gels durch Vermischen einer gelierbaren organischen Flüssigkeit mit einem Metall-Phosphatester, der ein Metall-Phosphat-Diester ist, wobei alle der Reagentien frei von Wasser und pH-beeinflussenden Substanzen sind;
   (b) Einführen eines harten partikelförmigen Versteifungsmittels innerhalb des Gels; und
   (c) Pumpen des Gels die Brunnenbohrung hinunter in Kontakt mit der unterirdischen Formation bei einem genügenden Druck, um einen Bruch in der Formation zu erzeugen und/oder zu erweitern.

12. Verfahren nach Anspruch 11, wobei die organische Flüssigkeit primär ein Kohlenwasserstoff ist, wobei einer der Reste des Phosphat-Diesters ein aliphatischer $C_1$ bis $C_{26}$- Rest ist, während ein anderer Rest davon ein aliphatischer $C_6$ bis $C_{26}$- Rest ist.

13. Verfahren nach Anspruch 12, wobei die aliphatischen Reste jeder Phosphatgruppe des Phosphat-Diesters Alkylreste sind.

**14.** Verfahren nach Anspruch 11 zum Aufbrechen einer unterirdischen Formation umfassend :

(a) Herstellen eines Gels umfassend ein Vermischen durch Zusammenbringen einer gelierfähigen organischen Flüssigkeit mit:

(i) einem Phosphat-Diester-Geliermittel hergestellt durch:

(1) Reaktion eines Phosphat-Triesters mit $P_2O_5$, um ein entsprechendes wasserfreies Polyphosphat herzustellen;

(2) Reaktion des Polyphosphats aus Schritt (1) mit einem Alkohol, um den korrespondierenden Phosphat-Diester herzustellen, bei dem ein Rest vom Triester und der andere vom Alkohol stammt; und

(ii) einem Metallsalzaktivator mit einem den pH nicht beeinflussenden Rest; wobei alle Reagentien frei von Wasser und pH-beeinflussenden Substanzen sind;

(b) Einbringen eines harten partikelförmigen Versteifungsmittels innerhalb des Gels; und

(c) Pumpen des Gels die Brunnenbohrung hinunter in Kontakt mit der unterirdischen Formation bei einem genügenden Druck, um einen Bruch in der Formation zu erzeugen und·oder zu erweitern.

FIGURE 1

FIGURE 2

EP 0 225 661 B1

FIGURE 3

FIGURE 4

15

EP 0 225 661 B1

FIGURE 5

FIGURE 6

16

EP 0 225 661 B1

FIGURE 7
VISCOSITY AT 150 DEG F $\left(121°C\right)$
DATA AT 30% EXCESS TEP

FIGURE 8
VISCOSITY AT 250 DEG F $\left(121°C\right)$
DATA AT 30% EXCESS ALFOL 810

17

FIGURE 9
VISCOSITY at 25° DEG F $\left(121 °C\right)$

Evaluating Step 2 Reaction conditions

Step 1 - 78 C X for 2 hours     $\left(158\,°F\right)$
Step 2 - 90 C X for 1 to 8 hours     $\left(194\,°F\right)$

FIGURE 10
VISCOSITY at 250 DEG F $\left(121 °C\right)$

Evaluating Step 2 Reaction conditions

Step 1 - 78 C X for 2 hours     $\left(158\,°F\right)$
Step 2 - 118 C X for 1 to 8 hours     $\left(316\,°F\right)$

## FIGURE 11

VISCOSITY AT 250 DEG F $(121\,°C)$

Evaluating Step 2 Reaction conditions

Step 1 - 70 C for 2 hours $(158\,°F)$
Step 2 - 130 C for 1 to 8 hours $(266\,°F)$

VISCOSITY AT 170 1/SEC (CPS) $[10^3\,Pa\cdot s]$

3 HR
2 HR
1 HR
4 HR

TIME (HOURS)

## FIGURE 12

VISCOSITY AT 250 DEG F $(121\,°C)$

Evaluating Step 1 Reaction conditions

Step 1 - 70 and 90 C for 1 and 2 hours $(158\,°F)\ (194\,°F)$
Step 2 - 130 C for 2 hours $(266\,°F)$

VISCOSITY AT 170 1/SEC (CPS) $[10^3\,Pa\cdot s]$

2 HR AT 70 C
1 HR AT 90 C
1 HR AT 70 C
2 HR AT 90 C

TIME (HOURS)

## FIGURE 13

VISCOSITY AT 250 DEG F $(121°C)$

Optimization of Reactant Ratios Using 25% excess TEP

Step 1 - 90 C for 1 hour $(194°F)$
Step 2 - 130 C for 2 hours $(266°F)$

## FIGURE 14

VISCOSITY AT 250 DEG F $(121°C)$

Optimization of Reactant Ratios Using 30% Excess TEP

Step 1 - 90 C for 1 hour $(194°F)$
Step 2 - 130 C for 2 hours $(266°F)$

20

FIGURE 15

VISCOSITY AT 250 DEG F $\left(121°F\right)$

Optimization of Reactant Ratios Using 45% Excess TEP

Step 1 - 90 C for 1 hour $\left(194°F\right)$
Step 2 - 130 C for 2 hours $\left(266°F\right)$

% Excess Alfol 810
32
22
40

VISCOSITY AT 170 1/SEC (CPS) $\left[\times 10^{3}\,Pa\cdot s\right]$

TIME (HOURS)

FIGURE 16

9 GAL GELLING AGENT/1000

TO 1071 SEC

234.5 SEC

91.8 SEC

29.5 SEC    31.2 SEC
27.2 SEC    30.8 SEC    33.2 SEC    38.3 SEC

MARSH FUNNEL TIME (SEC) $\left[\times 10^{3}\,Pa\cdot s\right]$

PERCENTAGE ACTIVATOR FOR REACHING ENDPOINT

21